# EUROPEAN PATENT SPECIFICATION

(11) **EP 0 676 919 B1**
(45) Date of publication and mention of the grant of the patent: **09.07.1997**
(21) Application number: 94903852.5
(22) Date of filing: 17.12.1993
(51) Int. Cl.: A22C 29/02

(54) **A DEVICE AND A METHOD FOR PROCESSING CRUSTACEANS**
VERFAHREN UND VORRICHTUNG ZUR VERARBEITUNG VON KRUSTAZEEN
DISPOSITIF ET PROCEDE DE TRAITEMENT DE CRUSTACES

(30) Priority: 18.12.1992 NL 9202198
(43) Date of publication of application: 18.10.1995
(60) Divisional application: 96203493.0
(73) Proprietor: MEGAPEL B.V., NL-2014 AE Haarlem (NL)
(72) Inventor: DE VRIES, Jacobus, Lambertus, NL-2014 AE Haarlem (NL)
(74) Representative: Louet Feisser, Arnold
(86) International application number: EP9303638
(87) International publication number: WO9414327

(56) References cited:
- WO-A-89/04802
- US-A- 4 259 179
- US-A- 4 928 352
- SOVIET INVENTIONS ILLUSTRATED Section Ch, Week 8406, 21 March 1984 Derwent Publications Ltd., London, GB; Class D, AN 84-035450 & SU,A,1 007 633 (BASIN SEVTEKHRYBP) 30 March 1983

## Description

The invention relates to a device and a method for processing crustaceans, such as shrimps. The peeling of crustaceans cannot easily be done in such a manner that one the one hand the flesh intended for consumption and on the other hand shell parts and other impurities can be discharged fully separated from each other. Generally the flesh of the crustaceans intended for consumption will also contain remnants of shell parts and other impurities.

A conventional method for removing the impurities from the flesh of the crustaceans intended for consumption, such as shrimps, is to spread the crustaceans on a so-called picking table, which is preferably provided with a conveyor belt, whereupon the impurities in question are removed by hand. This method is problematic, both from a hygienic point of view and for reasons of cost efficiency.

US-A-4,928,352 describes a device for separating crawfish meat from dorsal and ventral shell portions by transporting the material to be separated by an air flow, which air flow is passing a vein. Thereby the heavier parts do not pass the vein and are deflected to an exit outlet for the meat of the crawfish. However, experiences have shown that the separation capacity of such device is insufficient for separating crustaceans from impurities.

The object of the invention is to provide a device and a method by means of which remnants of shell parts and other impurities can be removed from peeled crustaceans, such as shrimps, in an efficient and reliable manner.

In order to accomplish this objective the device for processing crustaceans according to the invention is provided with a blowing device comprising means for effecting an upward air flow, and means for transporting the crustaceans into the air flow which passes through nozzle means having a plurality of air passages, and comprising means for transporting the crustaceans over the said nozzle means so that the crustaceans pass the air flow in substantially transverse direction with respect to the air flow, and comprising an air duct downstream of the nozzle means, which air duct comprises a constricted part with a passage which is at least 25% smaller than an upstream cross-sectional area of the air duct. By using this device the peeled crustaceans are lifted by the air flow, after which they fall back again, whilst shell parts and other impurities are carried along with the air flow.

A device for separating shell portions from a meat product portion of crawfish tail by an air flow is described in US-A-4,928,352. Thereby the product is transported in an upward air flow and directed towards a vein which catches the heavier material, while the lighter dorsal and ventral shell portions pass beyond the vein.

According to one aspect of the invention sorting means may furthermore be present for removing shell parts and impurities from the peeled crustaceans before said crustaceans pass the blowing device.

According to another aspect of the invention picking means provided with a table comprising a conveyor belt may furthermore be provided, on which the crustaceans may be inspected after they have passed the blowing device.

According to another aspect of the invention at least one part of the air duct is substantially rectangular, whereby the long side extends transversely to the direction of supply of the crustaceans. The narrowed part may thereby be formed by a constriction element, which is located at the long cross-sectional side of the downstream air duct, seen in the direction of supply of the crustaceans. In this manner an effective air flow is obtained in the blowing device.

According to another aspect of the invention it is also possible for the air duct to have two constricted parts, the second constricted part being located downstream, seen in the direction of the air flow, and being formed by two constriction elements extending into the air duct from the short cross-sectional sides of said air duct. According to another aspect of the invention the air duct may comprise a bend located behind the constriction or constrictions, said bend deflecting the air flow from an upward to a downward direction. It is also possible to provide two mutually symmetric bends.

Further aspects of the invention are mentioned in the claims, illustrated in the drawing and/or explained in more detail in the description of the Figures.

The invention also relates to a method for processing crustaceans, such as shrimps, wherein a flow of moving, peeled crustaceans is passed through an upward air flow, which air flow, after the flow of crustaceans has passed, is led through a constriction. Further aspects of this method are mentioned in the claims and are explained in more detail with reference to an embodiment to be described hereafter.

By way of illustration the invention will be described hereafter with reference to an embodiment of the device for processing crustaceans shown in the drawing.
Figure 1 is a plan view of the device;
Figure 2 is a side view of the device;
Figure 3 is a front view of the blowing device;
Figure 4 is a sectional view of the blowing device, along the line IV-IV in Figure 3;
Figures 5A, 5B, 5C and 5D are a plan view, a front view, a bottom view and a side view respectively of a composite blow nozzle;

The Figures are only diagrammatic illustrations of the embodiment.

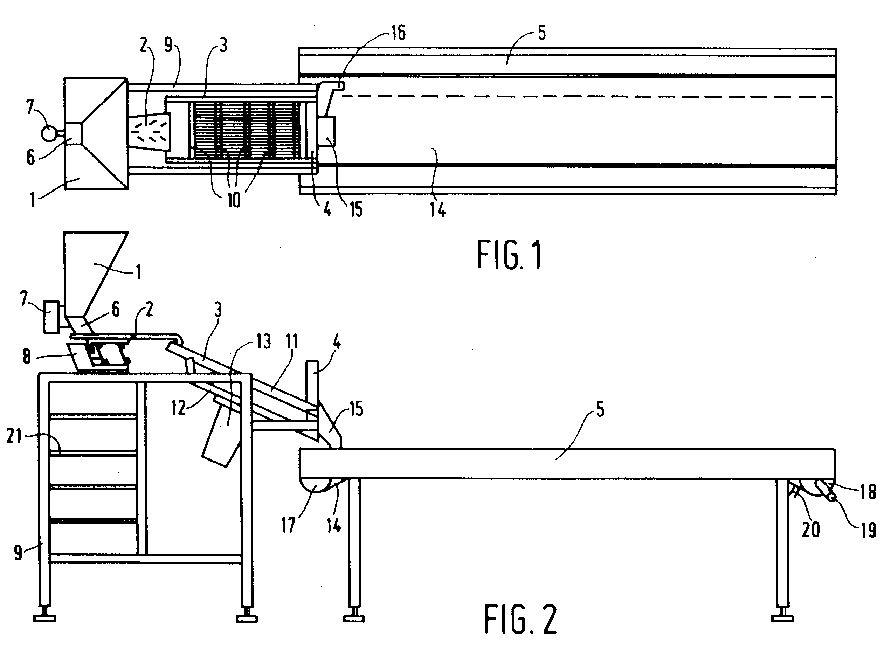

Figures 1 and 2 show a feed hopper 1, a batching chute 2, a sorting device 3, a blowing device 4, and a picking device 5. The feed hopper 1 is a downwardly tapering container having an outlet opening 6 for depositing peeled shrimps on the batching chute 2. The feed hopper 1 is provided with an imbalance motor 7 for vibrating the feed hopper 1. The batching chute 2 is connected to a frame 9 by means of a vibrating mechanism 8. Said vibrating mechanism 8 is adjustable, so that it is possible to adjust the amount of peeled shrimps carried to the sorting device 3.

The sorting device 3 is provided with a number of screen decks 10, both between the upper longitudinal girders 11 and between the lower longitudinal girders 12. Figure 1 shows only the four upper screen decks 10. The screen decks 10 will be described in more detail hereafter with reference to Figures 6 and 7.

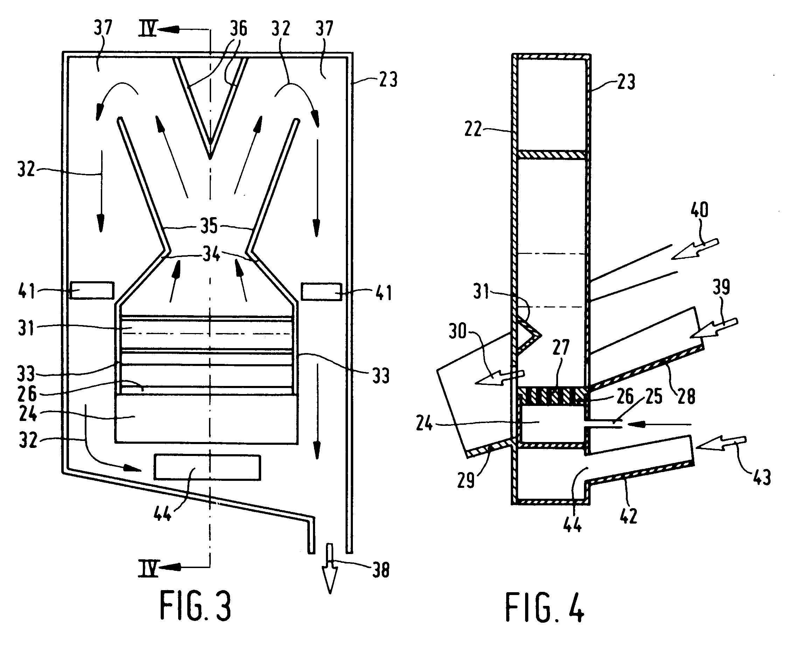

The blowing device 4, which will be described in more detail hereafter with reference to Figures 3 and 4, is secured to the frame 11, 12 of the sorting device 3. The frame 11, 12 of the sorting device 3 is spring-connected to the frame 9 and is provided with a vibrating motor 13, which can vibrate both the sorting device 3 and the blowing device 4.

The shrimps from the feed hopper 1, which have been processed via the batching chute 2, the sorting device 3 and the blowing device 4, land on a picking device 5, which consists of a table, above which a conveyor belt extends. The sorting device 3 and the blowing device 4 remove shell parts and other impurities from the flow of peeled shrimps, whereby the peeled shrimps, via the discharge means 15 (indicated as the discharge chute 29 in Figure 4), and the impurities, via the discharge means 16 (indicated by the arrow 38 in Figure 3), land on the conveyor belt 14. The conveyor belt 14 is passed over a starting pulley 17 and an end pulley 18. Near said end pulley 18 the peeled shrimps can be caught separated from the impurities removed therefrom. A scrape-off means 19 is provided near the end pulley 18 to keep shrimps from sticking to the conveyor belt 14. Furthermore a dirt scraper 20 is provided, which functions to keep the conveyor belt clean. The picking device 5 enables a visual inspection of the peeled shrimps.

The frame 9 is provided with a plurality of supports 21, in which storage bins may be placed, if desired.

Figures 3 and 4 show the blowing device indicated by numeral 4 in Figures 1 and 2. Figure 3 is a front view and Figure 4 is a sectional view along the line IV-IV in Figure 3. The cover plate 22 shown in Figure 4 has been left out in Figure 3 to show the interior of the blowing device.

Figure 4 shows the housing 23, within which an air compression chamber 24 is present, which is supplied with air, which may or may not be cooled, via the supply pipe 25. The upper side of the air compression chamber 24 is formed by a composite blow nozzle, which is for example made of plastic material. The blow nozzle 26 is provided with a plurality of substantially vertical air passages 27, which effect an upward air flow in the blowing device. The shrimps supplied via the feed chute 28 pass this upward air flow, as a result of which they are blown up together with the impurities that are present. Only the peeled shrimps fall back again, and they are subsequently discharged via the discharge chute 29, as indicated by the arrow 30.

A constriction element 31 in the shape of an angle section is provided above the composite blow nozzle 26. Due to the presence of said constriction element 31 the passage for the upward air flow is locally narrowed, so that an acceleration and a deceleration of the air flow occurs.

The housing 23 of the blowing device is covered by a cover plate 22, which is preferably made of a transparent material, so that it is possible to check the operation of the blowing device. The discharge chute 29 is secured to said cover plate 22.

Figure 3 is a front elevational view of the blowing device, wherein the cover 22 is removed. Arrows 32 indicate the air flow. Said air flow takes place through air ducts, which are formed by a number of walls 33, 34, 35, 36, which are provided in the housing 23 of the blowing device. From the composite blow nozzle 26 the walls 33 first extend parallel to each other, the constriction element 31 being mounted between said walls, whereupon the walls 34 extend obliquely towards each other. This causes a second constriction of the air duct, as a result of which a renewed acceleration of the air flow is effected. Then the air duct divides through the walls 35 extending obliquely outwards and two walls 36 mounted in the shape of a wedge. The air flow divided in this manner is then deflected in downward direction in the bends 37 of the air duct. Then the air flow exits the blowing device at the bottom side, indicated by the arrow 38, whereby shell parts and other impurities are carried along.

Arrow 39 in Figure 4 indicates where the peeled shrimps from the row of lower screen decks of the sorting device enter the blowing device. Arrow 40 indicates where shell parts and other impurities supplied by the upper row of screen decks enter the blowing device, namely through openings 41, so that said impurities are carried along by the air flow and exit the blowing device at the point indicated by the arrow 38.

Impurities which have landed under the lower row of screen decks are supplied via a feed chute 42, as indicated by the arrow 43, said impurities being carried to the air flow via the opening 44 and likewise exiting the blowing device at the point indicated by the arrow 38.

As already explained with reference to Figure 1 the shell parts and the impurities are deposited on the conveyor belt 14 via the discharge means 16, whilst the peeled shrimps are deposited on the conveyor belt 14 via the discharge means 15.

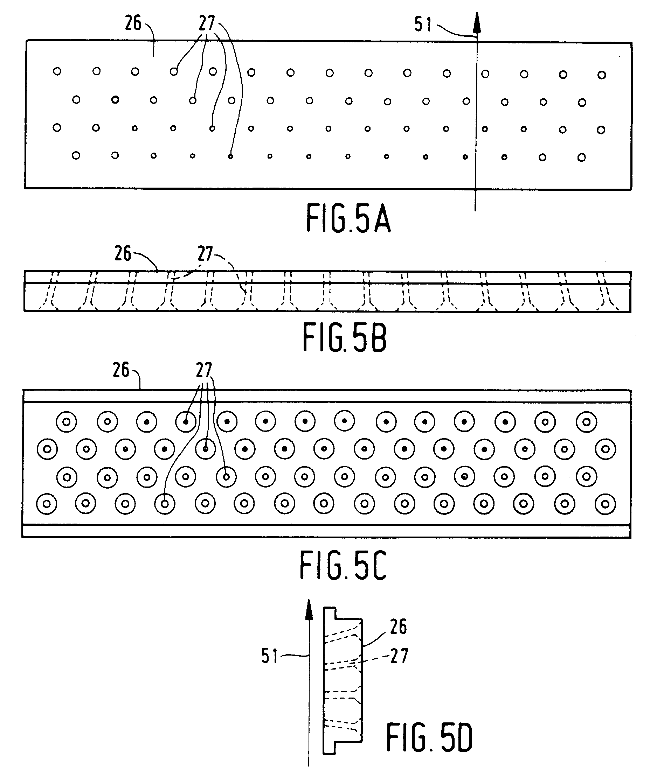

Figures 5A, 5B, 5C en 5D show the composite blow nozzle 26 in plan view, front view, bottom view and side view respectively. Air passages 27 indicated by dashed lines in Figure 5D are present in the blow nozzle. At the bottom side of the blow nozzle (on the right in Figure 5D) the channels comprise a conical part, which is conducive to a satisfactory passage of the air flow and which prevents noise from being generated. A satisfactory air flow above the composite blow nozzle 26 can be improved by providing air passages 27 with different diameters and having a number of said air passages inclined upwards.

In figure 5A the direction in which the shrimps move over the nozzle is indicated with arrow 51. The air passages are arranged in four rows directed tranversely with respect to arrow 51. In figure 5A the air passages in the first row and at both sides (left and right) have a larger diameter with respect to the other air passages, for example 2 mm, and the innermost air passages in the fourth row have a smaller diameter, for example 1 mm. The other air passages may have a diameter in between.

Also an improved air flow can be obtained by inclined air passages. As shown in figure 5D, which is a side view of figure 5A, the direction of the air passages are converging in the upward direction. In figure 5D the inclination of the air passages in the first row is 14°, in the second row is 7°, in the third row is 0° and in the fourth row is -7°. A similar convergency is shown in figure 5B, which is also a side view of figure 5A.

The blow nozzle, which may be made of plastic material, may have a thickness of for example 10 mm, whilst the diameter of the air passages may range from 1 - 3 mm. The mutual spacing between the air passages may for example range from 5 - 15 mm.

According to the invention the air which is supplied to the air compression chamber via the supply pipe 25 (Figure 4) can be humidified. Water can be dripped into the supply pipe. As a result of this addition of moisture the operation of the blowing device is improved, in particular the adherence of dirt can be avoided in this manner, and furthermore the extent of dehydration of the shrimps can be reduced. By evaporating water in the supply pipe the air flow is cooled, which may constitute a considerable advantage.

Furthermore the rate of flow of the air may be controlled independently of the amount of shrimps being supplied. As a result of this an optimum air flow can be adjusted for each individual flow of shrimps.

It will be apparent that the blowing device according to the invention may also be used in conjunction with a peeling machine for crustaceans, whereby the blowing device is used for one of the final operations following peeling.

The following devices and methods according to the invention are preferred embodiments.

A device whereby said air duct extends upwards and subsequently downwards in such a manner that the shell parts and impurities carried along by the air flow can be discharged via the conveyor belt of the picking device.

A device whereby said air passages are spread over said upper surface, the mutual spacing between said air passages ranging from 5 - 15 mm.

A device whereby the diameter of said air passages ranges from 1 - 3 mm.

A device whereby the diameter of the air passages located downstream, seen in the direction of supply of the crustaceans, is larger than that of the air passages located further upstream.

A device whereby the diameter of the air passages located further towards the outside, seen in the direction of supply of the crustaceans, is larger than that of the air passages located further inwards.

A device whereby the air passages located downstream and/or upstream, seen in the direction of supply of the crustaceans, are directed slightly inclined towards the centre of the blowing device.

A device whereby the air passages located further towards the outside, seen in the direction of supply of the crustaceans, are directed inclined towards the centre of the blowing device.

A device whereby said blow nozzle is detachably provided in said blowing device.

A device whereby said blow nozzle is made of plastic material or another corrosion-resistant material.

A device whereby said blow nozzle forms the partition between an air compression chamber and the processing room for the peeled crustaceans.

A device whereby the entrances of the air passages adjacent to the air compression chamber are conical.

A device whereby said blowing device is fixedly connected to a vibrating motor.

A device whereby said blowing device is fixedly connected to sorting means, which are connected to a vibrating motor.

A device whereby said blowing device is provided with a cover plate, which is at least partially made of a transparent material, in order to be able to observe whether the blowing device is operating correctly.

A device whereby a discharge chute for discharging the crustaceans is secured to said cover plate.

## Claims

1. A device for processing crustaceans, provided with a blowing device (4) comprising means for effecting an upward air flow and means for transporting the crustaceans into the air flow, charactarized in that the air flow passes through nozzle means (26) having a plurality of air passages (27), and comprising means (28,29) for transporting the crustaceans over the said nozzle means (26) so that the crustaceans cross the air flow in substantially transverse direction with respect to the air flow, and comprising an air duct downstream of the nozzle means (26), which air duct comprises a constricted part with a passage which is at least 25% smaller than an upstream cross-sectional area of the air duct.

2. A device according claim 1, characterized in that sorting means are present for removing shell parts and impurities from the peeled crustaceans before said crustaceans pass the blowing device.

3. A device according to any one of the preceding claims, characterized in that picking means provided with a table comprising a conveyor belt are present, on which the crustaceans having passed the blowing device may be inspected.

4. A device according to any one of the preceding claims, characterized in that at least one part of the air duct downstream of the nozzle means has a substantially rectangular cross-section, with a long side extending transversely to the direction of supply of the crustaceans.

5. A device according to any one of the preceding claims, characterized in that said air duct comprises two constricted parts, the second constricted part being located downstream with respect to other restricted part, seen in the direction of the air flow, and being formed by two constriction elements, which extend into said air duct from the short cross-sectional sides of said air duct.

6. A device according to any one of the preceding claims, characterized in that said blowing device is provided with a blow nozzle having air passages, which are directed upwards, said blow nozzle having a substantially flat upper surface, across which the crustaceans can be moved.

7. A device according to any one of the preceding claims, characterized in that means are provided for humidifying the air which is supplied to the blowing device, for example by feeding drops of water to the supply pipe.

8. A method for processing crustaceans, such as shrimps, wherein a flow of moving, peeled crustaceans is passed through an upward air flow, which air flow, after the flow of crustaceans has crossed the air flow, is led through a constriction.

9. A method according to claim 8, characterized in that said peeled crustaceans are deposited in a feed hopper, after which they are carried to a sorting device via a vibrating batching chute, where said crustaceans are sorted on a plurality of screen decks, whereby parts which are too large or too small are discharged, whilst the selected crustaceans are exposed to an air flow, wherein the remaining shell parts and other impurities are removed from said flow of crustaceans, whereupon the crustaceans thus cleaned are discharged.

10. A method according to any one of the claims 8 or 9, characterized in that the air supplied to the blowing device is humidified, for example by feeding drops of water to the supply pipe.

## Patentansprüche

1. Vorrichtung zum Verarbeiten von Schalentieren, mit einer Blasvorrichtung (4) mit einer Einrichtung zum Bewirken einer aufwärts gerichteten Luftströmung, und mit einer Einrichtung zum Transportieren der Schalentiere in die Luftströmung, dadurch gekennzeichnet, daß die Luftströmung durch eine Düseneinrichtung (26) mit einer Anzahl von Luftdurchlässen (27) hindurchgeht, und mit einer Einrichtung (28, 29) zum Transportieren der Schalentiere über die besagte Düseneinrichtung (26), so daß die Schalentiere die Luftströmung im wesentlichen in Querrichtung bezüglich der Luftströmung durchqueren, und mit einem Luftkanal stromab der Düseneinrichtung (26), der einen verengten Abschnitt mit einem Durchlaß aufweist, der zumindest 25% kleiner ist als die eine stromauf gelegene Querschnittsfläche des Luftkanals.

2. Vorrichtung nach Anspruch 1, dadurch gekennzeichnet, daß eine Sortiereinrichtung zum Entfernen von Schalenteilen und Verunreinigungen von den geschälten Schalentieren vorhanden ist, bevor die Schalentiere die Gebläseeinrichtung passieren.

3. Vorrichtung nach einem der vorangehenden Ansprüche, dadurch gekennzeichnet, daß eine Verleseeinrichtung mit einem Tisch und einem Fördergurt vorhanden ist, auf dem die Schalentiere überprüft werden können, nachdem sie die Blasvorrichtung passiert haben.

4. Vorrichtung nach einem der vorangehenden Ansprüche, dadurch gekennzeichnet, daß zumindest ein Teil des Luftkanals stromab der Düseneinrichtung im wesentlichen rechteckigen Querschnitt aufweist, wobei sich eine lange Seite quer zur Zufuhrrichtung der Schalentiere erstreckt.

5. Vorrichtung nach einem der vorangehenden Ansprüche, dadurch gekennzeichnet, daß der Luftkanal zwei verengte Abschnitte aufweist, wobei sich der zweite verengte Abschnitt bezüglich der Luftströmungsrichtung stromab des anderen verengten Abschnitts befindet, und aus zwei Verengungselementen gebildet ist, die sich von den kurzen Querschnittsseiten des Luftkanals in diesen hinein erstrecken.

6. Vorrichtung nach einem der vorangehenden Ansprüche, dadurch gekennzeichnet, daß die Blasvorrichtung mit einer Blasdüse mit Luftdurchlässen versehen ist, die nach oben gerichtet sind, wobei die Blasdüse eine im wesentlichen ebene Oberseite aufweist, über die die Schalentiere bewegt werden können.

7. Vorrichtung nach einem der vorangehenden Ansprüche, dadurch gekennzeichnet, daß eine Einrichtung zum Befeuchten der Luft vorgesehen ist, die der Blasvorrichtung zugeführt wird, beispielsweise durch Zuführen von Wassertropfen zu der Zufuhrleitung.

8. Verfahren zum Verarbeiten von Schalentieren wie etwa Shrimps, bei dem ein Strom von bewegten, geschälten Schalentieren durch eine nach oben gerichtet Luftströmung geleitet wird, wobei die Luftströmung, nachdem der Strom von Schalentieren hindurchgegangen ist, durch eine Verengung geleitet wird.

9. Verfahren nach Anspruch 8, dadurch gekennzeichnet, daß die geschälten Schalentiere in einen Zufuhrtrichter abgelegt werden, wonach sie über eine vibrierende Dosierungsrinne zu einer Sortiervorrichtung befördert werden, wo die Schalentiere auf einer Anzahl von Siebböden sortiert werden, wobei zu große oder zu kleine Teile entfernt werden, während die ausgewählten Schalentiere einer Luftströmung ausgesetzt werden, woduch verbleibende Schalenteile und andere Verunreinigungen aus dem Strom von Schalentieren entfernt werden, wonach die so gereinigten Schalentiere ausgegeben werden.

10. Verfahren nach einem der Ansprüche 8 oder 9, dadurch gekennzeichnet, daß die zu der Blasvorrichtung zugeführte Luft beispielsweise durch Zuführen von Wassertropfen in die Zuführungsleitung befeuchtet wird.

## Revendications

1. Dispositif pour traiter les crustacés, muni d'un dispositif de soufflerie (4) comprenant des moyens pour créer un flux d'air orienté vers le haut et des moyens pour amener les crustacés dans le flux d'air, caractérisé en ce que le flux d'air passe à travers des moyens en forme de buse (26) présentant une pluralité de passages pour l'air (27), qu'il comprend des moyens (28,29) pour amener les crustacés au-dessus des moyens (26) en forme de buse en sorte que les crustacés traversent le flux d'air en position sensiblement transversale par rapport au flux d'air, et qu'il comprend un conduit d'air situé en aval des moyens en forme de buse (26), ces moyens en forme de buse comprenant une partie étranglée laissant un passage qui est d'au moins 25 % inférieur à la section en coupe en amont du conduit d'air.

2. Dispositif pour traiter les crustacés selon la revendication 1, caractérisé en ce qu'on trouve des moyens de tri pour éliminer les parties de coquilles et les impuretés des crustacés décortiqués avant que les crustacés ne passent dans le dispositif de soufflerie.

3. Dispositif pour traiter les crustacés selon l'une des revendications précédentes, caractérisé en ce qu'on trouve des moyens de prélèvement comportant une table qui comprend une courroie convoyeuse sur laquelle les crustacés peuvent être inspectés une fois qu'ils ont passé le dispositif de soufflerie.

4. Dispositif pour traiter les crustacés selon l'une des revendications précédentes, caractérisé en ce qu'au moins une partie du conduit d'air en aval des moyens en forme de buse présente une section sensiblement rectangulaire présentant un long côté qui s'étend transversalement par rapport au sens d'alimentation en crustacés.

5. Dispositif pour traiter les crustacés selon l'une des revendications précédentes, caractérisé en ce que le conduit d'air comprend deux parties étranglées, la deuxième partie étranglée étant placée en aval par rapport à l'autre partie étranglée par rapport au sens du flux d'air, et est formé de deux éléments d'étranglement, qui s'étendent dans le conduit d'air depuis les petits côtés transversaux du conduit d'air.

6. Dispositif pour traiter les crustacés selon l'une des revendications précédentes, caractérisé en ce que le dispositif de soufflerie est muni d'une buse de soufflerie présentant des passages pour l'air dirigés vers le haut, la buse de soufflerie présentant une surface supérieure sensiblement plate à travers laquelle les crustacés sont déplacés.

7. Dispositif pour traiter les crustacés selon l'une des revendications précédentes, caractérisé en ce qu'on trouve des moyens pour humidifier l'air qui alimente le dispositif de soufflerie, par exemple par l'introduction de gouttes d'eau dans le tube d'alimentation.

8. Méthode pour traiter les crustacés, par exemple des crevettes, dans laquelle on fait passer un flux de crustacés en mouvement et décortiqués à travers un flux d'air dirigé vers le haut, ce flux d'air étant conduit à travers un étranglement après que le flux de crustacés a traversé le flux d'air.

9. Méthode selon la revendication 8, caractérisée en ce que les crustacés décortiqués sont déposés dans une trémie d'alimentation, après quoi ils sont amenés par lots à un dispositif de tri au moyen d'une glissière vibrante, où les crustacés sont triés sur une pluralité de tables tamisantes par lesquelles sont déchargées les parties trop grandes ou trop petites, tandis que les crustacés sélectionnés sont exposés au flux d'air, les parties de coquilles restantes et les autres impuretés étant éliminées du flux de crustacés, à la suite de quoi les crustacés ainsi nettoyés sont déchargés.

10. Méthode selon l'une des revendications 8 ou 9, caractérisée en ce que l'alimentation en air du dispositif de soufflerie est humidifiée, par exemple par introduction de gouttes d'eau dans le tube d'alimentation.
